# EUROPÄISCHE PATENTSCHRIFT

(11) **EP 1 454 109 B1**
(45) Veröffentlichungstag und Bekanntmachung des Hinweises auf die Patenterteilung: **05.04.2006**
(21) Anmeldenummer: 02790391.3
(22) Anmeldetag: 16.11.2002
(51) Int. Cl.: F28F 9/02, F01N 5/02

(54) **ABGASWÄRMEÜBERTRAGER**
WASTE GAS HEAT EXCHANGER
ECHANGEUR DE CHALEUR DE GAZ D'ECHAPPEMENT

(30) Priorität: 22.11.2001 DE 10157285
(43) Veröffentlichungstag der Anmeldung: 08.09.2004
(73) Patentinhaber: Behr GmbH & Co. KG, 70469 Stuttgart (DE)
(72) Erfinder: SCHINDLER, Martin, 70176 Stuttgart (DE)
(74) Vertreter: Grauel, Andreas
(86) Internationale Anmeldenummer: PCT/EP2002/012878
(87) Internationale Veröffentlichungsnummer: WO 2003/044441

(56) Entgegenhaltungen:
- EP-A- 0 930 429
- DE-A- 19 907 163
- GB-A- 1 101 867
- US-A- 1 558 139
- US-A- 2 488 807
- US-A- 4 133 374

## Beschreibung

Die Erfindung bezieht sich auf einen Abgaswärmeübertrager gemäß dem Oberbegriff des Patentanspruches 1. Ein solcher Abgaswärmeübertrager wurde durch die DE-A 199 07 163 der Anmelderin bekannt.

Bei dieser bekannten Bauweise sind die Rohrenden eines Rohrbündels in einem Rohrboden in entsprechenden Öffnungen aufgenommen und mit dem Rohrboden verschweißt. Das Rohrbündel mit den beiden Rohrböden ist in einem Gehäuse angeordnet, wobei die Rohrböden umfangsseitig mit dem Gehäusemantel verschweißt sind. Somit sind die Rohre über den Rohrboden mit dem Gehäuse fest verbunden, was unter bestimmten Bedingungen zu thermischen Spannungen führen kann. Die Rohre werden innen von heißem Abgas durchströmt und außen von kälterem Kühlmittel, welches auch die Innenseite des Gehäuses umspült. Insbesondere bei größeren Rohrlängen eines solchen Abgaswärmeübertragers, z. B. für Nutzfahrzeuge, können die unterschiedlichen Dehnungen von Rohren und Gehäusemantel zu nicht mehr zulässigen Spannungen führen, was beispielsweise eine Zerstörung der Rohrbodenverbindung zur Folge haben kann.

Es wurde daher bereits in der EP-A 0 930 429 vorgeschlagen, den einen Rohrboden eines Rohrbündels als Festlager und den anderen als Loslager in Form eines Schiebesitzes auszubilden. Dabei ist der Rohrboden umfangsseitig in einem Gleitsitz des Gehäuses gelagert und abgedichtet. Die Abgasrohre können sich somit unabhängig gegenüber dem Gehäuse ausdehnen. Allerdings hat diese Lösung den Nachteil, daß die Kühlmittelseite über den Gleitsitz mit der Abgasseite in Verbindung steht, so daß bei Versagen der Dichtung Kühlmittel in den Abgasstrom gelangen kann, was bei einer Abgasrückführung zu unerwünschten Folgen führen kann, z. B. Motorschaden.

Es ist daher Aufgabe der Erfindung, einen Abgaswärmeübertrager der eingangs genannten Art dahingehend zu verbessern, daß einerseits keine Thermospannungen auftreten und andererseits keine Vermischung von Kühlmittel und Abgasstrom auftritt.

Diese Aufgabe wird durch die Merkmale des Anspruches 1 gelöst. Durch diese Ausbildung des Loslagers als Schiebesitz wird die Abgasseite sicher von der Kühlmittelseite getrennt. Der Gehäusemantel gleitet mit seiner Außenseite in einem am Rohrboden befestigten Gehäusesitz - bei eventueller Leckäge tritt das Kühlmittel nach Außen aus, d. h. eine Vermischung mit dem Abgasstrom ist ausgeschlossen. Bei signifikanten Temperaturdifferenzen zwischen den Abgasrohren und dem Gehäusemantel werden sich die Rohre stärker ausdehnen als der Mantel: in diesem Falle bleibt der Gehäusemantel "stehen", während der Rohrboden über den Rand des Gehäusemantels hinaus "wächst". Der gesamte Abgaswärmeübertrager wird in sofern länger - allerdings kann diese Dehnung durch die Abgasleitungen an der Ein- und Austrittsseite des Abgaswärmeübertragers durch eine entsprechend weiche Ausbildung oder eine nachgiebige Lagerung aufgefangen werden.

Vorteilhafte Ausgestaltungen der Erfindung ergeben sich aus den abhängigen Ansprüchen. Danach ergibt sich eine vorteilhafte Abdichtung des Gehäusemantels gegenüber dem Gehäusesitz, also auf der Kühlmittelseite, durch einen O-Ring, der ein Gleiten des Gehäusemantels im Gehäusesitz ermöglicht.

Nach einer vorteilhaften Weiterbildung der Erfindung kann der O-Ring von einem gehäusefest angeordneten Ring aufgenommen werden, wodurch Verformungen des dünnwandigen Gehäusemantels vermieden werden und eine verbesserte Dichtwirkung erzielt wird.

In weiterer vorteilhafter Ausgestaltung der Erfindung ist auf der anderen Seite des Rohrbodens, also zur Abgasseite hin ein Anschlußflansch vorgesehen, an welchen sich ein Diffusor oder ein Abgasrohr anschließt. Durch diese Flanschverbindung ergibt sich eine günstige Einbaumöglichkeit in den Abgasstrang.

Ausführungsbeispiele sind in der Zeichnung dargestellt und werden im Folgenden näher beschrieben. Es zeigen:
- **Fig. 1**: eine erste Ausführungsform eines Schiebesitzes und
- **Fig. 2**: eine zweite Ausführungsform eines Schiebesitzes.

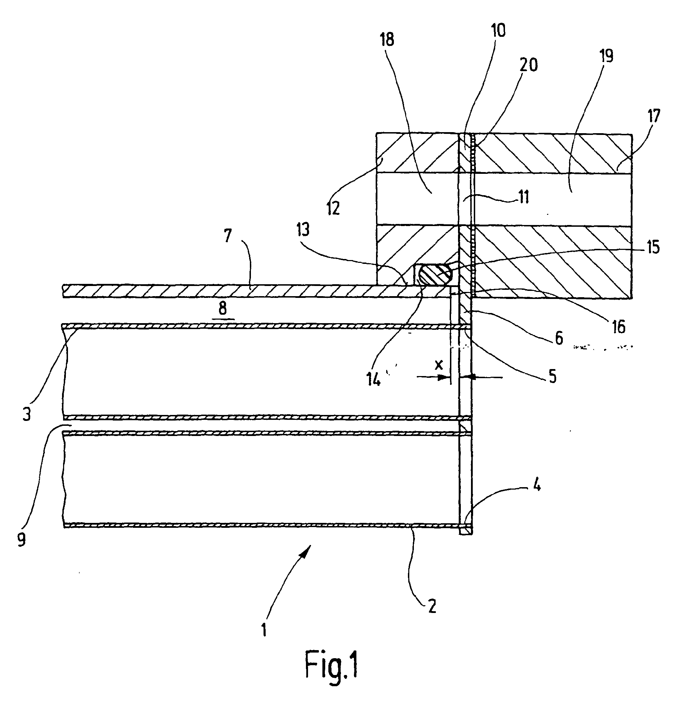

**Fig. 1** zeigt einen Ausschnitt 1 eines vollständig nicht dargestellten Abgaswärmeübertragers, wie er bei der Abgasrückführung, insbesondere bei Nutzfahrzeugen mit Dieselmotoren eingesetzt wird. Bei dieser Darstellung ist nur ein Ende des Rohrbündels des Abgaswärmeübertragers gezeigt, welches als Loslager ausgebildet ist. Das andere, nicht dargestellte Ende des Rohrbündels ist in an sich bekannter Weise als Festlager ausgebildet, d. h. der Rohrboden ist fest, z. B. durch Laserschweißen mit dem Gehäusemantel verbunden. Von dem gesamten Rohrbündel sind hier nur zwei Abgasrohre 2 und 3 dargestellt, die im Inneren von Abgas durchströmt werden. Die Rohrenden 4 und 5 sind in einem Rohrboden 6 aufgenommen und mit diesem stoffschlüssig verbunden, vorzugsweise durch Laserschweißen. Eine Verlötung wäre ebenso möglich. Das gesamte Rohrbündel ist von einem Gehäusemantel umgeben, von dem hier nur ein Ausschnitt 7 dargestellt ist. In den Zwischenräumen 8 zwischen Gehäusemantel und Rohr 3 sowie den Zwischenräumen 9 zwischen den einzelnen Rohren 2 und 3 strömt Kühlmittel, welches durch einen nicht dargestellten Einlaß in den Gehäusemantel gelangt und diesen über einen nicht dargestellten Auslaß wieder verläßt. Das Kühlmittel wird dem Kühlmittelkreislauf des Verbrennungsmotors des Kraftfahrzeuges entnommen. Der Rohrboden 6, welcher als etwa 2 mm starkes Blech ausgebildet ist, steht über den Umfang des Gehäusemantels 7 nach Außen vor und weist somit einen Ringflansch 10 auf, der mit auf den Umfang verteilten Bohrungen 11 versehen ist. Auf der in der Zeichnung linken Seite, also der dem Gehäusemantel 7 zugewandten Seite befindet sich ein ringförmiger Dichtflansch 12, der als Gehäusesitz ausgebildet ist und eine Gleitfläche 13, entsprechend dem Umfang und der Kontur des Gehäusemantels 7, also beispielsweise kreisförmig aufweist. Zwischen der Gleitfläche 13 und dem Rohrboden 6 bzw . dem Ringflansch 10 ist in den Flansch 12 eine Ringnut 14 eingearbeitet, die einen O-Ring 15 zur Abdichtung des Gehäusemantels 7 gegenüber dem Flansch 12 aufnimmt. Somit bilden die Außenfläche des Gehäusemantels 7 und die Gleitfläche 13 einen Schiebesitz, d. h. ein Loslager. Die Stirnfläche 16 des Gehäusemantels 7 ist gegenüber dem Rohrboden 6 um das Maß x zurückgesetzt, wobei x der Relativdehnung zwischen den Rohren 2,3 und dem Gehäusemantel 7 entspricht. Auf der in der Zeichnung rechten Seite des Ringflansches 10, also zur Abgasseite hin befindet sich ein Anschlußflansch 17, über welchen ein nicht dargestellter Diffusor oder ein ebenfalls nicht dargestelltes Abgasrohr angeschlossen werden kann. Beide Flansche 12 und 17 weisen mit der Bohrung 11 fluchtende Bohrungen 18 und 19 auf, so daß sämtliche Flanschteile 12, 10 und 17 über eine nicht dargestellte Schraubverbindung fest miteinander verbunden werden können. Zwischen dem Ringflansch 10 und dem Anschlußflansch 17 ist zur Abdichtung des Abgases eine Flachdichtung 20 eingelegt.

Die Wärmedehnung bei unterschiedlichen Temperaturen der Abgasrohre und des Gehäusemantels vollzieht sich in folgender Weise: der Gehäusemantel 7, der über nicht dargestellte Halter beispielsweise mit dem nicht dargestellten Motorblock verbunden ist, bleibt quasi stehen. Wenn die Abgasrohre 2, 3 sich stärker ausdehnen als der Gehäusemantel 7 "wächst" der Rohrboden 6 um das Maß x über die Stirnfläche 16 des Gehäusemantels hinaus. Dabei schiebt er die beiden Flansche 12 und 17 mit nach rechts, so daß der Gehäusesitz mit der Gleitfläche 13 und dem O-Ring 15 auf dem Gehäusemantel 7 gleiten. Gleichzeitig wird jedoch die Abdichtung des Kühlmittelraumes 8 nach Außen hin gewährleistet. Da der Flansch 17, an welchem sich die weitere Abgasführung (nicht dargestellt) anschließt ebenfalls "mitwächst", d. h. um das Maß der Ausdehnung verschoben wird, ist eine entsprechend "weiche" Ausbildung des Abgasstranges erforderlich. Dies ist jedoch im Hinblick auf die relativ geringen Ausdehnungen kein technisches Problem. Da der Rohrboden 6 nach Außen in den Ringflansch 10 übergeht und dieser über die Flachdichtung 20 mit dem Anschlußflansch 17 dicht verbunden ist, ist der Abgasraum hermetisch gegenüber dem Kühlmittelraum abgeschlossen, so daß eine Vermischung von Abgas und Kühlmittel ausgeschlossen ist.

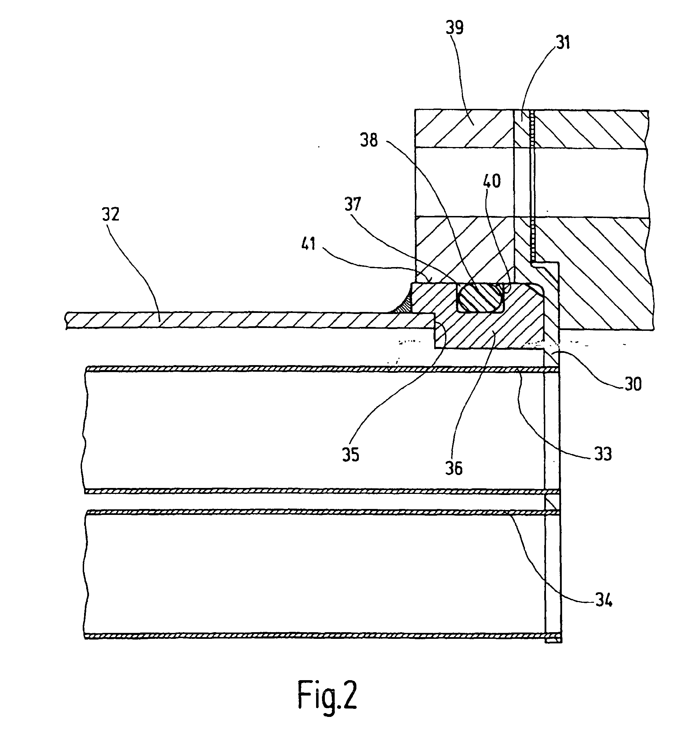

**Fig. 2** zeigt ein weiteres Ausführungsbeispiel für die konstruktive Ausgestaltung des Schiebesitzes, d. h. des Loslagers. Ein Rohrboden 30 weist hier einen abgewinkelten, parallel zur Rohrbodenebene versetzten Ringflansch 31 auf, der sich in radialer Richtung über einen Gehäusemantel 32 hinaus erstreckt. Im Rohrboden 30 sind - wie beim Ausführungsbeispiel gemäß Fig. 1 - Abgasrohre 33 und 34 eingeschweißt und bilden somit eine dichte und feste Rohrbodenverbindung. Die Rohre 33, 34 sind Teil eines nicht vollständig dargestellten Rohrbündels, welches allseitig von dem Gehäusemantel 32 umgeben ist, der von Kühlmittel durchströmt wird. Am Stirnende 35 des Gehäusemantels ist ein Ringteil 36 befestigt, z. B. gelötet oder geschweißt, welches hinsichtlich seiner Wandstärke größer dimensioniert ist als der Gehäusemantel 32. Das Ringteil 36 weist zu seiner Außenseite hin eine Ringnut 37 auf, in die ein O-Ring 38 eingelegt ist. Am Ringflansch 31 ist ein Dichtungsflansch 39 befestigt, der auf seiner dem Gehäusemantel 32 zugewandten Seite eine Gleitfläche 40 aufweist, die mit einer Außenfläche 41 auf dem Ringteil 36 einen Schiebesitz bildet. Im Unterschied zum Ausführungsbeispiel gemäß Fig. 1 ist bei diesem Ausführungsbeispiel die Ringnut mit dem O-Ring gehäuseseitig angeordnet; dies hat den Vorteil, daß der relativ dünnwandige Gehäusemantel 32 im stirnseitigen Bereich verstärkt ist und daß damit in diesem Bereich keine aus der kühlmittelseitigen Druckbelastung resultierenden Verformungen auftreten, die zu einer Undichtigkeit der O-Ringabdichtung führen könnten.

Bei beiden vorgenannten Ausführungsbeispielen gemäß Fig. 1 und Fig. 2 ist der Schiebesitz bzw. die Dicht- und Gleitfläche auf der Außenseite des Gehäusemantels angeordnet. Grundsätzlich ist es jedoch auch möglich, einen entsprechenden Schiebesitz auf der Innenseite des Gehäusemantels vorzusehen, wobei ein Teil des Schiebesitzes wiederum mit dem Rohrboden verbunden wäre.

## Patentansprüche

1. Abgaswämieübertrager mit mindestens einem Rohrbündel, dessen Rohre (2,3) von Abgas durchströmbar sind und dessen Rohrenden (4,5) jeweils mit einem Rohrboden (6,30) stoffschlüssig verbunden sind, und einem Gehäusemantel (7,32), welcher das Rohrbündel umgibt und von einem Kühlmittel durchströmbar ist und daß einer der beiden Rohrböden, als Festlager ausgebildet fest mit dem Gehäusemantel verbunden ist und der andere Rohrboden (6, 30) als Loslager ausgebildet ist, **dadurch gekennzeichnet, daß** der andere Rohrboden (6, 30) mit dem Gehäusemantel (7, 32) einen Schiebesitz (13, 40, 41) bildet, der einerseits mit der Kühlmittelseite (8) und andererseits mit der Außenseite in Verbindung steht, wobei der Schiebesitz (13, 40, 41 ) auf der Außenseite des Gehäusemantels (7, 32) angeordnet ist.

2. Abgaswärmeübertrager nach Anspruch 1, **dadurch gekennzeichnet, daß** der Schiebesitz (13, 40, 41) eine Ringnut (14, 37) mit O-Ring (15, 38) aufweist.

3. Abgaswärmeübertrager nach Anspruch 1 oder 2, **dadurch gekennzeichnet, daß** der Rohrboden (6, 30 ) einen über den Gehäusemantel (7, 32) ragenden Ringflansch (10, 31) aufweist, der den Schiebesitz (13, 40, 41) trägt.

4. Abgaswärmetauscher nach Anspruch 3, **dadurch gekennzeichnet, daß** der Schiebesitz (13, 40) von einem Dichtungsflansch (12, 39) gebildet wird, der mit dem Ringflansch (10, 31) verbunden ist.

5. Abgaswärmetauscher nach Anspruch 3 oder 4, **dadurch gekennzeichnet, daß** stirnseitig am Gehäusemantel (32) ein Ringteil (36) befestigt ist, welches den O-Ring (38) in einer Ringnut (37) aufnimmt und mit einem am Rohrboden (30,31) befestigten Dichtungsflansch (39) den Schiebesitz (40, 41) bildet.

6. Abgaswärmetauscher nach einem der vorhergehenden Ansprüche 3 bis 5, **dadurch gekennzeichnet, daß** der Ringflansch (10) über eine Dichtung (20) mit einem Anschlußflansch (17) für die Abgasleitung verbunden ist.

7. Abgaswärmeübertrager nach einem der vorhergehenden Ansprüche 3 bis 6, **dadurch gekennzeichnet, daß** die Flanschteile (12, 10, 17) eine Flanschverbindung bilden.

## Claims

1. Exhaust heat exchanger with at least one tube nest through the tubes (2, 3) of which exhaust gas can flow and the tube ends (4, 5) of which are joined to a tube sheet (6, 30) by adhesive force, and with a housing jacket (7, 32) surrounding the tube nest, through which a coolant can flow, one of the two tube sheets being designed as a fixed bearing permanently connected to the housing jacket while the other tube sheet (6, 30) is designed as a movable bearing, **characterised in that** the other tube sheet (6, 30) forms a sliding seat (13, 40, 41) with the housing jacket (7, 32), being connected to the coolant side on the one hand and to the outside on the other hand, the sliding seat (13, 40, 41) being located on the outside of the housing jacket (7, 32).

2. Exhaust heat exchanger according to claim 1, **characterised in that** the sliding seat (13, 40, 41) features an annular groove (14, 37) with an O-ring (15, 38).

3. Exhaust heat exchanger according to claim 1 or 2, **characterised in that** the tube sheet (6, 30) has an annular flange (10, 31) projecting beyond the housing jacket (7, 32) and supporting the sliding seat (13, 40, 41).

4. Exhaust heat exchanger according to claim 3, **characterised in that** the sliding seat (13, 40) is represented by a seal flange (12, 39) connected to the annular flange (10, 31).

5. Exhaust heat exchanger according to claim 3 or 4, **characterised in that** an annular part (36) is attached to the end face of the housing jacket (32), which holds the O-ring (38) in an annular groove (37) and forms the sliding seat (40, 41) with a seal flange (39) secured to the tube sheet (30, 31).

6. Exhaust heat exchanger according to any of claims 3 to 5, **characterised in that** the annular flange (10) is connected to a connecting flange (17) for the exhaust gas line via a seal (20).

7. Exhaust heat exchanger according to any of claims 3 to 6, **characterised in that** the flange parts (12, 10, 17) provide a flange joint.

## Revendications

1. Échangeur de chaleur à gaz d'échappement comprenant au moins un faisceau de tubes, dont les tubes (2, 3) peuvent être traversés par des gaz d'échappement et dont les extrémités de tube (4, 5) sont reliées par adhérence de matière respectivement à un fond de tube (6, 30), et une enveloppe de boîtier (7, 32) qui entoure le faisceau du tubes et peut être traversée par un réfrigérant, dans lequel l'un des deux fonds de tube est réalisé sous la forme d'un palier fixe et est relié de façon fixe à l'enveloppe de boîtier, et l'autre fond de tube (6, 30) est réalisé sous la forme d'un palier libre, **caractérisé en ce que** l'autre fond de tube (6, 30) forme avec l'enveloppe de boîtier (7, 32) un siège coulissant (13, 40, 41) qui est en liaison d'une part avec le côté réfrigérant (8) et d'autre part avec le côté extérieur, le siège coulissant (13, 40, 41) étant disposé sur le côté extérieur de l'enveloppe de boîtier (7, 32).

2. Échangeur de chaleur à gaz d'échappement selon la revendication 1, **caractérisé en ce que** le siège coulissant (13, 40, 41) présente une rainure annulaire (14, 37) avec un joint torique (15, 38).

3. Échangeur de chaleur à gaz d'échappement selon la revendication 1 ou 2, **caractérisé en ce que** le fond de tube (6, 30) présente une bride annulaire (10, 31) dépassant de l'enveloppe de boîtier (7, 32) qui porte le siège coulissant (13, 40, 41).

4. Échangeur de chaleur à gaz d'échappement selon la revendication 3, **caractérisé en ce que** le siège coulissant (13, 40) est formé par une bride d'étanchéité (12, 39) qui est reliée à la bride annulaire (10, 31).

5. Échangeur de chaleur à gaz d'échappement selon la revendication 3 ou 4, **caractérisé en ce que** sur le côté avant de l'enveloppe de boîtier (32) est fixée une partie annulaire (36) qui reçoit le joint torique (38) dans une rainure annulaire (37) et forme le siège coulissant (40, 41) avec une bride d'étanchéité (39) fixée sur le fond de tube (30, 31).

6. Échangeur de chaleur à gaz d'échappement selon l'une quelconque des 3 à 5 précédentes, **caractérisé en ce que** la bride annulaire (10) est reliée au moyen d'un joint (20) à une bride de raccordement (17) pour la conduite des gaz d'échappement.

7. Échangeur de chaleur à gaz d'échappement selon l'une quelconque des 3 à 6 précédentes, **caractérisé en ce que** les parties de bride (12, 10, 17) forment un assemblage par bride.
